Europäisches Patentamt

**European Patent Office**

Office européen des brevets

(19)

(11) Numéro de publication: **0 242 241**
**B1**

(12) **FASCICULE DE BREVET EUROPEEN**

(45) Date de publication du fascicule du brevet:
04.07.90

(51) Int. Cl.⁵: **E01F 15/00**
**// B60D1/00**

(21) Numéro de dépôt: **87400370.0**

(22) Date de dépôt: **20.02.87**

(54) Bagues élastiques à caractéristiques non linéaires pour barrières de sécurité mobiles.

(30) Priorité: **09.04.86 FR 8605177**

(43) Date de publication de la demande:
**21.10.87 Bulletin 87/43**

(45) Mention de la délivrance du brevet:
**04.07.90 Bulletin 90/27**

(84) Etats contractants désignés:
**AT BE CH DE FR GB IT LI LU NL SE**

(56) Documents cités:
**DE-C- 739 988**
**DE-C- 932 228**
**FR-A- 1 395 797**
**US-A- 4 474 503**

**TRAVAUX, supplément Mars 1987 "Prix de l'innovation 1986", pages 25-32, Editions Science et Industrie S.A., Paris, FR; R. DURAND: "Le séparateur transposable"**
**TRAVAUX, supplément février 1986 "Prix de l'innovation 1985", page 3, Editions Science et Industrie S.A., Paris, FR; R. SOULAS: "Quatre années de prix de l'innovation"**
**TRAVAUX, no. 591, septembre 1984, pages 82-83, Editions Science et Industrie S.A., Paris, FR; "Un remède contre la déprime: l'innovation"**

(73) Titulaire: **CAOUTCHOUC MANUFACTURE ET PLASTIQUES, 143bis, rue Yves le Coz, F-78005 Versailles(FR)**

(72) Inventeur: **Bechu, Jean-Pierre, Les Poissons 20Ter, rue de Bezons, F-92400 Courbevoie(FR)**

**Description**

L'invention s'applique au domaine des barrières de sécurité, mobiles, en particulier les profilés de séparation centrale des voies d'autoroutes dans lesquels une série de blocs indépendants s'articule pour former une chaîne continue qui permet, d'une part, une amélioration de la sécurité en cas d'impact d'un véhicule -la progressivité du choc entraînant un certain nombre d'éléments constitutifs successifs- et d'autre part une possibilité de déplacement de cette chaîne de blocs articulés pour constituer des protections lourdes le long d'un chantier provisoire par exemple.

La protection contre les collisions, sur les voies rapides de circulation et, en particulier, contre les accidents graves provoqués par l'intrusion des véhicules sur la voie de circulation dans le sens opposé, a été grandement améliorée par la mise en place de protections centrales, formées de profilés séparateurs en béton qui sont généralement coulés sur place.

De même la protection latérale des chantiers provisoires, antérieurement assurée par des barrières légères, se trouve notablement accrue par l'alignement de blocs lourds et indépendants, dont la solidarisation est apparue nécessaire.

Il s'avère en effet utile de pouvoir ces séparateurs, soit pour modifier les voies en fonction de la circulation sur les voies rapides ou les autoroutes, soit pour rendre à la circulation celles momentanément rendues inutilisables par un chantier provisoire.

Ces manipulations, fréquentes, représentent une lourde charge pour la gestion des routes.

Il est apparu que ces deux types de protection lourde deviendraient plus facilement manipulables par un véhicule approprié chevauchant la file de profilés, si dans la chaîne ainsi constituée, les blocs, d'une longueur d'un mètre environ, indépendants étaient rendus solidaires par des axes verticaux, servant de pivots d'articulation au cours de la trajectoire guidée que cette chaîne de blocs parcourt dans le véhicule spécial. Un tel véhicule est décrit dans le brevet FR 2.567.170, de la société TSS et dans un article publié dans la revue "Travaux" de septembre 1985, pages 12 à 18.

On connaît des bagues élastiques destinées à la liaison entre des organes en mouvement telles que celles décrites dans les brevets FR 2.411.751, SE 7.606.909 et surtout DE 2.614.963, de la société Diehl, mais elles n'ont pour but que d'assurer une position statique d'équilibre des entr'axes, définie par la tension ou la légère compression qui se propage dans l'alignement des éléments ainsi reliés comme c'est le cas dans la chenille d'un véhicule lourd.

Il est essentiellement demandé à ce type de bagues de fonctionner comme un simple ressort à élasticité radiale linéaire.

Lors de l'emploi de telles bagues élastiques dans le système de séparateur transposable, le déplacement résultant des variations d'entr'axes en cas de collision d'un véhicule, exercerait une accélération sur le bloc voisin proportionnelle à la rigidité radiale d'un tel axe élastique.

Les solutions de l'art antérieur n'apportent donc que des solutions partielles au système de séparateur transposable qui nécessite, en raison des techniques utilisées pour la transposition des blocs, un dispositif de rappel des entr'axes de blocs successifs vers une position d'équilibre.

En raison du caractère de nouveauté que présente le véhicule spécial pour séparateurs transposables, il apparait que les solutions de l'art antérieur ne donnent qu'imparfaitement satisfaction. Par contre, les différents essais réalisés démontrent la nécessité d'associer, dans l'articulation entre blocs successifs, un jeu longitudinal suffisant pour assurer une répartition des petites différences de trajectoire au cours du transfert des blocs d'une file à l'autre par ledit véhicule spécial et un système d'équilibrage des blocs lors de ce transfert.

L'invention a donc pour objectif un dispositif permettant la réalisation d'un système d'articulation pour blocs successifs de séparateur transposable qui permette à la fois, d'absorber les débattements dûs aux variations de trajectoire des blocs enchaînés au cours du transfert et de provoquer un rappel des jeux longitudinaux vers une position moyenne d'équilibre afin de permettre un fonctionnement correct du véhicule spécial sur les voies en pente ou en courbe.

L'invention est constituée par une bague élastique qui sera positionnée sur l'axe commun d'assemblage de deux blocs successifs formant barrière de sécurité sur un chantier ou séparateur de voies sur route ou autoroute. Pour assurer les fonctions nécessaires de souplesse transversale et de rappel des jeux longitudinaux vers une position d'équilibre, ladite bague élastique présente, par le choix du matériau constitutif, des caractéristiques mécaniques en compression dont la variation n'est pas proportionnelle à la déformation, le module de compression augmentant plus rapidement, pour une déformation supérieure à 40 % qu'entre une déformation nulle et cette valeur. Pour simplifier l'exposé de l'invention, le matériau sera défini, par la suite comme un matériau à caractéristiques non linéaires.

Les caractéristiques et variantes de la bague élastique objet de l'invention seront mieux comprises à la lecture de la description accompagnant les dessins, dans lesquels :

- la figure 1 représente le montage de la bague élastique sur l'axe reliant deux blocs voisins, à la position d'équilibre ;
- la figure 2 illustre quelques exemples de réalisation de la bague élastique ;
- la figure 3 montre la bague élastique déformée au maximum permis par les jeux venant en fin de course;
- la figure 4 illustre, sur un graphique, le fonctionnement en rappel des entr'axes vers la position d'équilibre.

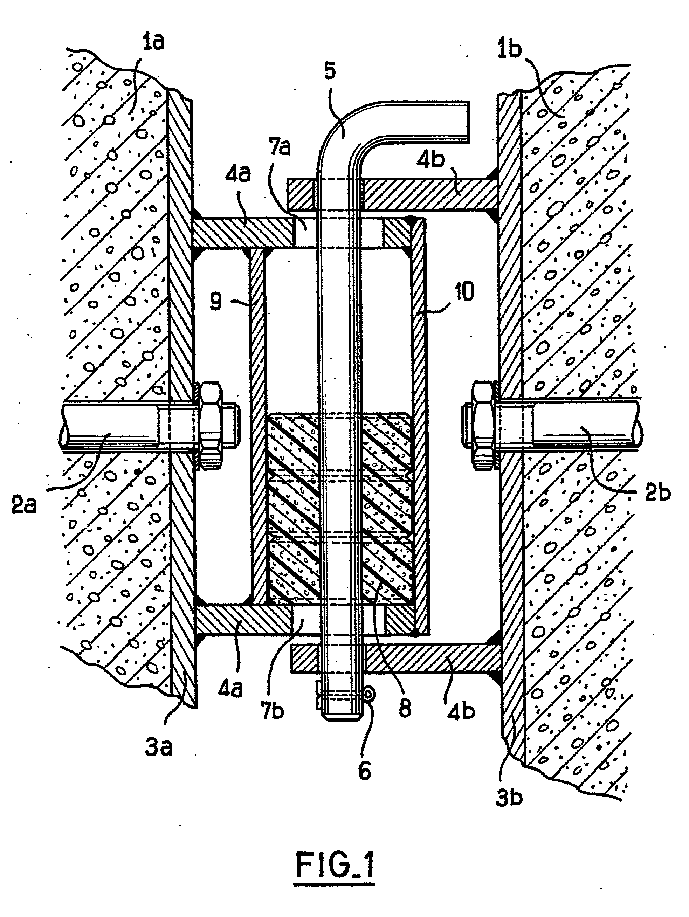

La figure 1 est une coupe longitudinale prise entre deux blocs de béton successifs (1a) et (1b), dont le profil extérieur transversal est conforme aux normes établies par l'Administration pour le type considéré de barrière latérale ou de séparateur central de sécurité. L'assemblage se fait, par exemple, par des boulons (2a) et (2b), traversant longitudinalement les blocs (1a) et (1b), qui évitent que lesdits blocs (1a) et (1b) ne soient soumis aux chocs exercés, en traction, par l'impact accidentel d'un véhicule. Lesdits boulons (2a) et (2b) relient, pour chacun des blocs, les ferrures (3a) et (3b) à l'articulation entre deux blocs voisins, par d'autres ferrures (4a) et (4b), soudées respectivement aux ferrures (3a) et (3b), par l'intermédiaire d'un axe commun (5) comportant une goupille (6). Ledit axe commun (5), monté à faible jeu, de l'ordre du millimètre, par deux alésages, dans les ferrures (4b), permet les débattements verticaux, au cours du transfert en trajectoire courbe imposée par le fonctionnement du véhicule spécial de pose, ainsi qu'une certaine course longitudinale de l'axe commun (5) dans les ferrures (4a), grâce à des boutonnières de guidage (7a) et (7b), dont la largeur dans le sens transversal est adaptée à l'obtention d'un jeu faible, de l'ordre du millimètre, sur l'axe, empêchant de ce fait tout basculement des blocs (1a) et (1b).

Le jeu longitudinal, compris entre 5 et 10 millimètres, autorisé par lesdites boutonnières (7a) et (7b) est rappelé vers une position moyenne grâce à l'interposition de la bague élastique à caractéristiques non linéaires (8), objet de l'invention, en appui libre sur deux armatures rigides, généralement métalliques (9) et (10), solidaires de la ferrure (3a) par l'intermédiaire des ferrures (4a), l'armature rigide (10) s'opposant à la traction de la chaîne ainsi constituée, l'élément s'opposant à la compression pouvant être, comme représenté, l'armature rigide (9) ou encore la ferrure (3a) en appui sur le béton.

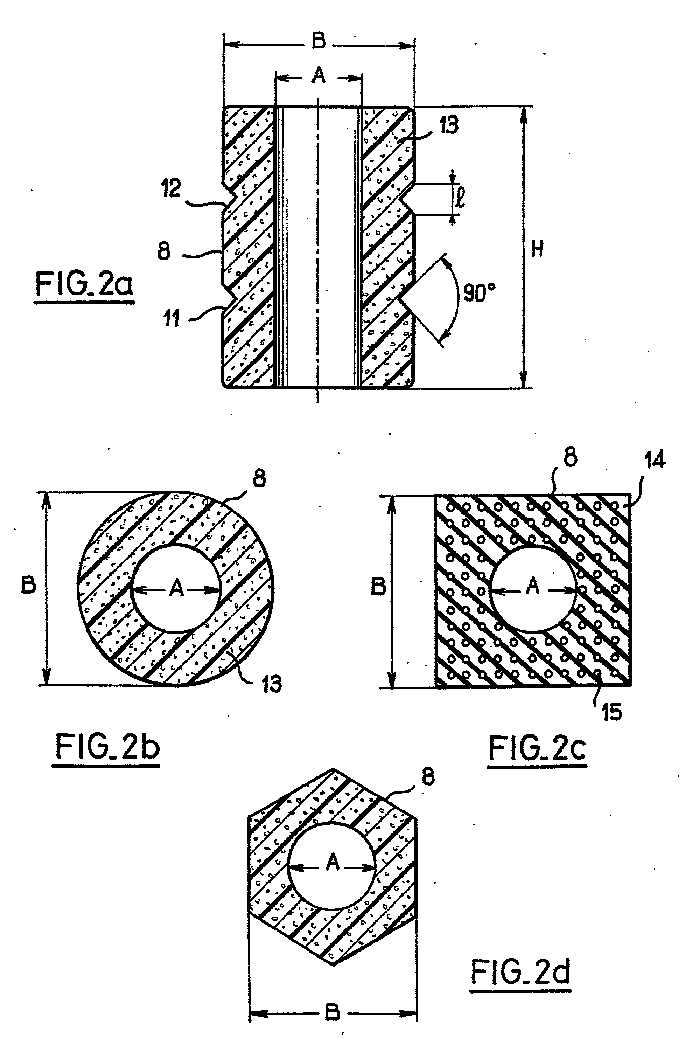

La figure 2 illustre quelques exemples de réalisation de la bague élastique à caractéristiques non linéaires (8).

La vue 2a est une coupe de la bague élastique (8) réalisée en matériau cellulaire (13) qui présente, dans sa masse, les caractéristiques de non linéarité nécessaires. L'alésage (A) est ajusté à faible jeu, de l'ordre du millimètre, ce qui permettra une pose aisée sur chantier de l'axe commun, muni d'une goupille pour empêcher qu'il ne se soulève lors de la manoeuvre de transfert par le véhicule spécial élevant successivement chacun des blocs de quelques centimètres.

La dimension (B) de la bague élastique à caractéristiques non linéaires (8) est voisine, sans jeu, de l'écartement des armatures rigides (représentés en (9) et (10) sur la figure 1), de façon à faciliter la pose ou la dépose sur un chantier, en particulier en raison du faible écartement des deux blocs de béton qui doit cependant laisser la place au passage du bras d'un opérateur.

La hauteur (H) est inférieure à la hauteur du logement entre les ferrures (représentées en (4a) sur la figure 1) de manière à permettre à la bague élastique (8) de suivre le mouvement vertical de l'axe commun dans le débattement entre deux blocs lors du transfert.

Dans la réalisation illustrée, la bague élastique (8) comporte une nervure basse (11), située à environ un tiers de la hauteur (H) et une nervure haute (12), située à environ deux tiers de ladite hauteur (H).

Les nervures basse (11) et haute (12) présentent, à titre d'exemple non limitatif, un angle d'ouverture de 90° et une largeur (1) d'environ 10 millimètres, ces valeurs étant ajustées pour obtenir la rigidité d'ensemble souhaitée.

Lorsque les propriétés mécaniques du matériau constitutif correspondent à la rigidité souhaitée dans l'utilisation, les nervures (11) et (12) peuvent être supprimées.

La vue 2b représente la bague élastique à caractéristiques non linéaires (8) vue du dessus, réalisée en matériau cellulaire (13), comme la bague élastique de la vue 2a, de section circulaire, de diamètre (B), avec un alésage (A).

La vue 2c illustre la réalisation de la bague élastique à caractéristiques non linéaires (8), de section carrée, de côté (B) constituée d'un matériau élastique (14) dans lequel ont été ménagées, au cours de la mise en oeuvre, des alvéoles de petites dimensions (15), disposées longitudinalement.

La vue 2d décrit une autre réalisation de la bague élastique à caractéristiques non linéaires (8), de section polygonale, constituée d'un matériau cellulaire (13) présentant les propriétés mécaniques désirées. Sur le dessin, la section est hexagonale mais il est bien évident que toute forme polygonale présentant les dimensions (A) et (B) nécessaires conviendrait.

Pour la réalisation de la bague élastique à caractéristiques non linéaires (8), objet de l'invention, il est avantageux d'utiliser un matériau cellulaire (13), non alvéolé, dont le module est compris entre 1 et 5 MPa, sous une déformation de 40 % ou un mélange à base de caoutchouc (14), comportant des alvéoles (15), présentant les mêmes caractéristiques de module apparent, sous la même déformation.

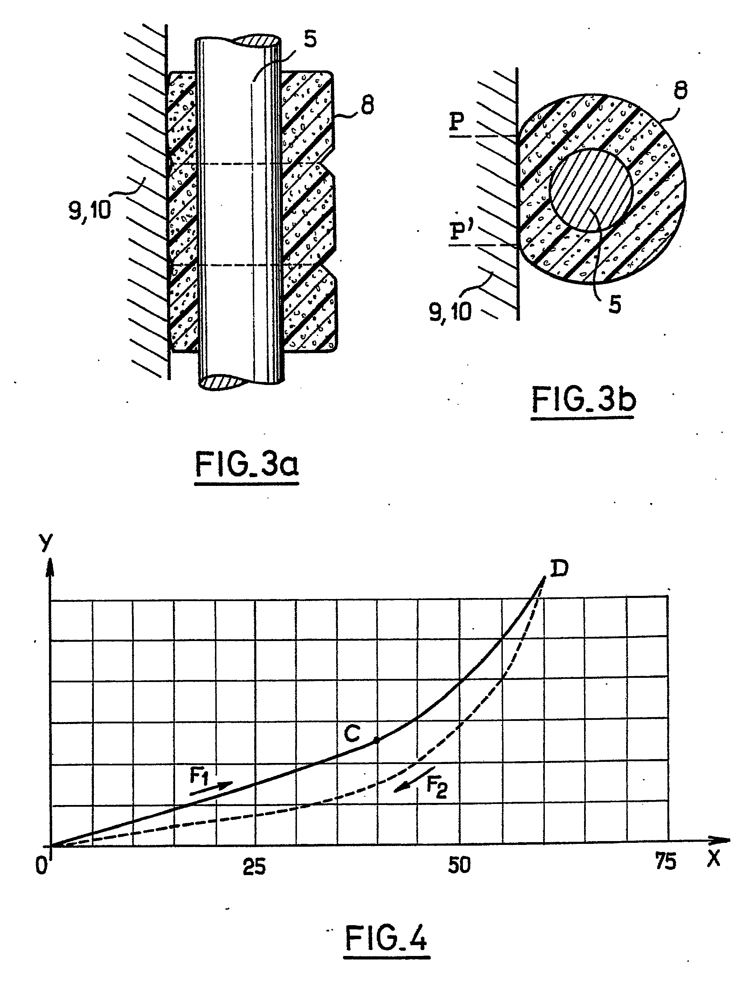

La figure 3 montre, sur la vue 3a, une coupe et, sur la vue 3b, une élévation de la bague élastique à caractéristiques non linéaires (8), comprimée au maximum entre l'une ou l'autre des armatures rigides (9) ou (10) et l'axe commun (5), solidaire, par traction ou compression, des ferrures (non représentées) (4b).

La vue 3b permet de visualiser comment une compression de 50 % de l'épaisseur annulaire, - égale à la moitié de la différence entre la dimension extérieure et l'alésage (représentés respectivement en B et en A sur la figure 2) - est possible grâce à la déformabilité locale du matériau constitutif de la bague élastique à caractéristiques non linéaires (8), le contact plan (PP') de la partie de ladite bague élastique (8) en appui sur les armatures rigides (9) ou (10) dépassant largement le diamètre de l'axe commun (représenté en (5) sur la figure 1).

La figure 4 illustre, sur un graphique, le comportement de la bague élastique à caractéristiques non linéaires, en compression, provoquant le rappel des entr'axes vers la position d'équilibre.

L'axe (OX) représente la déflexion, en pourcentage relatif de l'épaisseur initiale, liée à la charge représentée sur l'axe (OY), sous une contrainte de compression.

Sur la courbe (F1), correspondant à l'application de la contrainte de compression, après une première partie linéaire de la déformation - jusqu'à environ 40 % de l'épaisseur initiale - représentée par la partie (OC) de la courbe, il se produit un accroissement rapide de rigidité, même aux déformations lentes (environ 15 millimètres par minute), représentée par la courbe (CD).

La courbe de retour (DO), correspondant à la suppression progressive de la contrainte de compression, qui tient compte de la relaxation de la matière, représente le rappel vers la position d'équilibre des éléments suivant le graphique (F2), la rigidité, même aux vitesses lentes indiquées précédemment, restant de l'ordre de la moitié de la rigidité pendant la période de compression.

En conclusion, il apparait bien que la bague élastique objet de l'invention s'adapte parfaitement aux fonctions de souplesse transversale et de rappel des jeux longitudinaux vers une position d'équilibre, lorsqu'elle est montée sur l'axe commun de deux blocs de béton successifs, grâce au comportement non linéaire en compression du (ou des) matériau(x) constitutif(s).

Un mode de réalisation de la bague élastique à caractéristiques non linéaires consiste à utiliser un polyuréthanne cellulaire, élaboré en moule fermé au cours de la réticulation de la matière. En fonctionnement, sous un effort de compression, l'élasticité de la matière élastomérique associée à l'effet pneumatique dû à la présence de gaz dans les lacunes microcellulaires du matériau résultent, à l'échelle macroscopique, en une variation non linéaire de la rigidité en fonction de la déformation. Par ailleurs, lorsque la déformation dépasse 40 %, le matériau présente une résistance élevée à ladite déformation, ce qu'aucun élastomère massif connu ne permettrait.

Enfin, de par l'existence simultanée de cellules fermées et de cellules ouvertes à faible porosité au sein du matériau, la rigidité dynamique aux chocs est de deux à trois fois supérieure à la rigidité statique; ceci présente l'avantage, lors de l'entraînement de la barrière par un véhicule accidenté, d'exercer sur les blocs voisins des accélérations proches de l'optimum pour appliquer sur le véhicule des forces retardatrices successives les plus voisines possibles d'une décélération constante, apportant une sécurité supplémentaire aux barrières de protection.

L'homme de l'art peut, bien entendu, apporter au dispositif de bague élastique, objet de l'invention, ainsi qu'à ses variantes illustrées sur les figures, diverses modifications sans sortir du cadre de l'invention.

## Revendications

1. Bague élastique (8) disposée autour de l'axe d'assemblage (5) des éléments articulés formant une barrière de sécurité pour chantiers ou un séparateur de voies sur routes ou autoroutes caractérisée en ce qu'elle est constituée d'un matériau élastique (13) qui lui confère, sous contrainte de compression, des caractéristiques mécaniques non linéaires avec la déformation, le module de compression augmentant plus rapidement pour une déformation supérieure à 40% qu'entre une déformation nulle et cette valeur.

2. Bague élastique à caractéristiques non linéaires en compression, selon la revendication 1 caractérisée en ce que le matériau constitutif (13) est cellulaire et que son module, sous une déformation de 40%, est compris entre 1 et 5 MPa.

3. Bague élastique à caractéristiques non linéaires en compression, selon la revendication 2, caractérisée en ce que le matériau cellulaire (13) est du polyuréthane.

4. Bague élastique à caractéristiques non linéaires en compression, selon la revendication 1, caractérisée en ce que le matériau constitutif est un mélange à base du caoutchouc (14) dans lequel ont été ménagées des alvéoles (15) de manière à ce que le module apparent de l'ensemble, sous une compression de 40%, soit compris entre 1 et 5 MPa.

## Patentansprüche

1. Elastischer Ring, der um die Verbindungsachse von zwei gelenkigen Elementen herum angeordnet ist, die eine Sicherheitsbarriere für Baustellen oder eine Leitschiene zur Unterteilung der Fahrbahnen auf Straßen oder Autobahnen bilden, dadurch gekennzeichnet, daß er aus einem elastischen Material gebildet ist, das ihm bei Druckbelastung mechanische Eigenschaften verleiht, die zur Verformung nicht linear sind.

2. Elastischer Ring mit nicht linearen Kompressionseigenschaften nach Anspruch 1, dadurch gekennzeichnet, daß das Grundmaterial (13) zellenförmig ist und daß sein Modul bei einer Verformung von 40% 1 bis 5 MPa beträgt.

3. Elastischer Ring mit nicht linearen Kompressionseigenschaften nach Anspruch 2, dadurch gekennzeichnet, daß das zellenartige Material (13) Polyureathan ist.

4. Elastischer Ring mit nicht linearen Kompressionseigenschaften nach Anspruch 1, dadurch gekennzeichnet, daß das Grundmaterial eine Mischung auf der Basis von Gummi (14) ist, in der Luftkammern (15) derart angeordnet sind, daß der Modul der Gesamtanordnung bei einer Verformung von 40% 1 bis 5 MPa beträgt.

## Claims

1. Elastic ring arranged about the assembly axis of articulated elements forming a safety barrier for works sites or a separator of lanes on roads or motorways, characterized in that it is constituted by an elastic material which gives it, under compressive stress, non-linear mechanical characteristics upon deformation.

2. Elastic ring having non-linear characteristics under compression, according to Claim 1, characterized in that the material (13) of which it is constituted is cellular and that its modulus, under a deformation of 40%, is comprised between 1 and 5 MPa.

3. Elastic ring having non-linear characteristics under compression, according to Claim 2, characterized in that the cellular material (13) is polyurethane.

4. Elastic ring having non-linear characteristics under compression, according to Claim 1, characterized in that the material of which it is constituted is a rubber-based mixture (14), in which cells (15) have been arranged such that the apparent modulus of the unit, under a compression of 40%, is comprised between 1 and 5 MPa.

FIG.1

FIG.2a

FIG.2b

FIG.2c

FIG.2d

FIG.3a

FIG.3b

FIG.4